# EUROPÄISCHE PATENTSCHRIFT

(11) **EP 2 946 712 B1**
(45) Veröffentlichungstag und Bekanntmachung des Hinweises auf die Patenterteilung: **06.06.2018**
(21) Anmeldenummer: 15162348.5
(22) Anmeldetag: 02.04.2015
(51) Int. Cl.: A47L 11/18

(54) **SELBSTFAHRENDES BODENREINIGUNGSGERÄT MIT EINEM EINEM FÜHRUNGSFAHRZEUG FOLGENDEN FOLGEFAHRZEUG**
SELF-PROPELLED FLOOR CLEANING DEVICE WITH A FOLLOWING VEHICLE FOLLOWING A GUIDE VEHICLE
APPAREIL DE NETTOYAGE DE SOL AUTOMOBILE ÉQUIPÉ D'UN VÉHICULE SUIVEUR SUIVANT UN VÉHICULE MENEUR

(30) Priorität: 16.04.2014 DE 102014105460
(43) Veröffentlichungstag der Anmeldung: 25.11.2015
(73) Patentinhaber: Vorwerk & Co. Interholding GmbH, 42275 Wuppertal (DE)
(72) Erfinder: Eidmohammadi, Nazli, 41324 Göteborg (SE); Hoffmann, Sabrina, 42653 Solingen (DE)
(74) Vertreter: Müller, Enno

(56) Entgegenhaltungen:
- WO-A1-97/49528
- WO-A1-2005/006935
- US-B1- 8 938 850

## Beschreibung

Die Erfindung betrifft ein selbstfahrendes Bodenreinigungsgerät mit einem manuell gesteuerten oder programmgesteuerten, einen Bearbeitungsweg über eine zu reinigende Oberfläche abfahrenden ersten Reinigungsfahrzeug, mit einer ersten Reinigungseinrichtung zur Durchführung eines ersten Reinigungsschrittes.

Die Erfindung betrifft darüber hinaus ein Verfahren zum Betrieb eines derartigen Reinigungsgerätes beziehungsweise ein in einer Steuereinrichtung des Bodenreinigungsgerätes implementiertes Steuerprogramm.

Ein selbstfahrendes Bodenreinigungsgerät, wie es Ausgangspunkt der vorliegenden Erfindung ist, wird von der DE 102 42 257 A1 offenbart. Ein gattungsgemäßes Bodenreinigungsgerät erfüllt die Funktion eines Reinigungsroboters und besitzt eine Antriebseinheit sowie Sensoren zur Erfassung der Umgebung und eine Steuereinrichtung, die eine Recheneinheit aufweist zur Verarbeitung und zur Erzeugung von Steueranweisungen. Die Steueranweisungen werden aus Steuervorgaben gewonnen. Die Steuervorgaben können beispielsweise mittels einer Fernsteuerung manuell dem Bodenreinigungsgerät zugeführt werden. Es ist aber auch vorgesehen, dass die Steuereinrichtung in der Lage ist, sich selbsttätig in einem zu reinigenden Raum zu orientieren und eine Fahrstrategie zu erstellen. Verfahren zur Orientierung eines selbstfahrenden Bodenreinigungsgerätes in einem Raum zur Kartenbildung und zum Erstellen von Bearbeitungswegen auf zu reinigenden Bodenflächen sind aus den EP 2 471 426 A2, DE 10 2009 059 217 A1, DE 10 2010 000174 A1, DE 10 2010 015 941 A1, DE 10 2010 016 553 A1 und DE 10 2008 014 912 A1 bekannt.

Weiter ist zum Stand der Technik auf die WO 2005/006935 A1 zu verweisen. Hieraus ist es bekannt, bei einem Reinigungsfahrzeug Funktionsteile zusätzlich modulartig vorzusehen.

Der Erfindung liegt die Aufgabe zugrunde, das Anwendungsspektrum eines selbstfahrenden Bodenreinigungsgerätes zu vergrößern und ein Verfahren anzugeben, mit dem das Reinigungsergebnis verbessert wird.

Gelöst wird die Aufgabe durch die in den Ansprüchen angegebene Erfindung. Zunächst und im Wesentlichen schlägt die Erfindung ein zweites Reinigungsfahrzeug vor, das eine zweite Reinigungseinrichtung zur Durchführung eines zweiten Reinigungsschrittes aufweist. Das zweite Reinigungsfahrzeug ist derart an das erste Reinigungsfahrzeug gekoppelt, dass es dem ersten Reinigungsfahrzeug auf seinem Bearbeitungsweg folgt. Es kann sich dabei um eine lösbare mechanische Kopplung handeln. Es ist aber auch vorgesehen, dass die beiden Reinigungsfahrzeuge logisch/funktionell, beispielsweise lediglich durch eine Datenübertragungsstrecke aneinander gekoppelt sind und hierzu jeweils eigene Antriebseinrichtungen aufweisen. Beide Reinigungsfahrzeuge weisen bevorzugt eine Steuereinrichtung auf, die über die besagte Datenübertragungsstrecke oder aber auch im mechanisch gekoppelten Zustand über eine kabelgebundene Datenübertragungsstrecke miteinander kommunizieren können. Sind die beiden Reinigungsfahrzeuge nicht miteinander mechanisch gekoppelt, so ist die Steuereinrichtung des zweiten Reinigungsfahrzeugs so eingerichtet, dass das zweite Reinigungsfahrzeug dem ersten Reinigungsfahrzeug auf dessen Bearbeitungsweg folgt. Der Folgeweg, auf dem sich das zweite Reinigungsfahrzeug bewegt, entspricht somit zumindest abschnittsweise dem Bearbeitungsweg, auf dem sich das erste Reinigungsfahrzeug bewegt. Die beiden Reinigungsschritte unterscheiden sich. Ein Reinigungsschritt, bevorzugt der erste Reinigungsschritt, ist ein Trockenreinigungsschritt. Hierzu besitzt bevorzugt das erste Reinigungsfahrzeug eine Trockenreinigungseinrichtung, beispielsweise ein Bürsten- oder Kehr-Werk und/ oder eine Saugeinrichtung. Das andere Reinigungsverfahren ist bevorzugt ein Feuchtreinigungsverfahren. Hierzu besitzt insbesondere das zweite Reinigungsfahrzeug eine Feuchtreinigungseinrichtung, die beispielsweise eine Wisch- oder eine kombinierte Saug-/ Wischeinrichtung ist.

Das zweite Reinigungsfahrzeug besitzt somit ein Wisch-Werk, eine Befeuchtungseinrichtung und eine Saugeinrichtung. Mit der Befeuchtungseinrichtung kann die Bodenoberfläche unter Verwendung von Wasser, das im zweiten Reinigungsfahrzeug in einem Frischwassertank mitgeführt wird, befeuchtet werden. Das Wisch-Werk kann eine mechanische Reinigung durchführen. Die Feuchtigkeit wird über einen Saugmund in einen Schmutzwassertank des zweiten Reinigungsfahrzeugs abgesaugt. Das erste Reinigungsfahrzeug kann Sensorelemente aufweisen, mit denen es sich im Raum orientiert, um entsprechend einer Fahrstrategie systematisch die zu reinigende Bodenfläche abzufahren. Die Sensoranordnung ist darüber hinaus in der Lage, Hindernisse zu erkennen und die Bodenoberfläche zu analysieren. Beispielsweise ist die Sensoreinrichtung in der Lage zu unterscheiden, welche Abschnitte der Bodenoberfläche nur trocken und welche Abschnitte der Bodenoberfläche auch feucht gereinigt werden sollen. Über die Datenübertragungsstrecke werden Daten, also insbesondere Orientierungsdaten, Daten betreffend Hindernisse und/oder Daten betreffend die Bodenoberfläche, an die Steuereinrichtung des zweiten Reinigungsfahrzeugs übertragen. Auf der Basis dieser Daten ist das zweite Reinigungsfahrzeug insbesondere in der Lage, dem ersten Reinigungsfahrzeug zu folgen, Hindernisse zu umfahren, aber auch die zweite Reinigungseinrichtung, also die Feuchtreinigungseinrichtung, zu aktivieren und zu deaktivieren; beispielsweise erfolgt beim Überfahren eines Teppichs eine Deaktivierung der Feuchtreinigung. Die Kommunikation zwischen den beiden Reinigungsfahrzeugen kann direkt erfolgen. Die drahtlose, aber auch drahtgebundene Kommunikation kann nach einem digitalen Standardformat erfolgen. In Betracht kommt insbesondere ein Netzwerkprotokoll. Die Kommunikation zwischen den beiden Reinigungsfahrzeugen kann aber auch indirekt erfolgen; beispielsweise kann die Basisstation eine Relayfunktion ausüben. Bei dem erfindungsgemäßen Verfahren beziehungsweise bei dem Steuerprogramm werden Steuervorgaben bereitgestellt. Die Steuervorgaben können manuelle Steuerbefehle sein, die beispielsweise über eine Fernbedienung dem ersten Reinigungsfahrzeug gegeben werden. Die Steuervorgaben können aber auch als Algorithmus (ausführbares Programm) ausgebildet sein, der in der Steuereinrichtung implementiert ist. Dieser Algorithmus ist in der Lage, eine Fahrstrategie zu erzeugen, nach welcher das erste Reinigungsfahrzeug systematisch die zu reinigenden Oberflächen abfährt. Die Steuereinrichtung des ersten Reinigungsfahrzeuges erstellt Steueranweisungen, mit denen das Fahrwerk des ersten Reinigungsfahrzeuges angesteuert wird. Auf dem Bearbeitungsweg, den das erste Reinigungsfahrzeug abfährt, wird zumindest abschnittweise ein erster Reinigungsschritt, insbesondere ein Trockenreinigungsschritt, durchgeführt. Über die Datenübertragungsstrecke erhält das zweite Reinigungsfahrzeug Steuervorgaben oder zweite Steueranweisungen. Erhält das zweite Reinigungsfahrzeug lediglich Steuervorgaben, so ist die Steuereinrichtung des zweiten Reinigungsfahrzeuges in der Lage, aus diesen Steuervorgaben zweite Steueranweisungen zu erstellen, nach denen das Fahrwerk des zweiten Reinigungsfahrzeuges angesteuert wird. Die Steueranweisungen können auch die Aktivierung oder Inaktivierung der zweiten Reinigungseinrichtung, also insbesondere der Feuchtreinigungseinrichtung betreffen, so dass das zweite Reinigungsfahrzeug zumindest abschnittweise auf dem Bearbeitungsweg einen zweiten Reinigungsschritt durchführt. Werden die beiden Reinigungsfahrzeuge in mechanischer Kopplung betrieben, so können sich die vom ersten auf das zweite Reinigungsfahrzeug übertragenen Daten auf Angaben über die Beschaffenheit des zu reinigenden Bodens beschränken oder lediglich Schaltbefehle sein, mit denen die zweite Reinigungseinrichtung aktiviert beziehungsweise deaktiviert wird. Anstelle einer Inaktivierung der zweiten Reinigungseinrichtung ist aber auch vorgesehen, dass sich das zweite Reinigungsfahrzeug vom ersten Reinigungsfahrzeug löst, wenn dieses einen Bodenbereich überfährt, der nicht feucht gereinigt werden soll. Nachdem das erste Reinigungsfahrzeug einen derartigen Bodenbereich gereinigt hat, kommt es erneut zu einer Kopplung zwischen den beiden Reinigungsfahrzeugen, so dass weitere Bodenabschnitte trocken und feucht gereinigt werden. Sind die beiden Reinigungsfahrzeuge mechanisch aneinander gekoppelt, so kuppeln die beiden Reinigungsfahrzeuge wieder. Dabei können Kupplungshilfen, wie Fangarme oder dergleichen, verwendet werden, die die Findung der beiden Fahrzeuge erleichtern. Sind die beiden Reinigungsfahrzeuge hingegen lediglich logisch/funktionell gekoppelt, so folgt das zweite Reinigungsfahrzeug dem ersten Reinigungsfahrzeug in einem festgelegten Abstand. Die Abstandskontrolle kann über Abstandssensoren erfolgen. Die beiden Reinigungsfahrzeuge können gemeinsam an einer Basisstation andocken. Dabei kann sich der Abstand des zweiten Reinigungsfahrzeuges zum ersten Reinigungsfahrzeug auf Null reduzieren. Eines der beiden Reinigungsfahrzeuge wird dann direkt mit der Basisstation elektrisch verbunden. Die elektrische Verbindung des anderen Reinigungsfahrzeuges mit der Basisstation erfolgt über das unmittelbar an der Basisstation angedockte Reinigungsfahrzeug. Alternativ können die beiden Reinigungsfahrzeuge aber auch getrennt voneinander an der Basisstation andocken. Die Basisstation kann hierzu zwei Andockpositionen besitzen. Diese Andockpositionen können von den Reinigungsfahrzeugen selbständig angefahren werden. Es können aber auch Hilfsmittel, insbesondere Hilfsmittel der Basisstation vorgesehen sein, mit deren Hilfe das Reinigungsfahrzeug an die Andockposition manövriert wird. Letztere Option bietet den Vorteil, dass auch komplexere Schnittstellen vorgehalten werden können, über die zusätzlich zur Ladefunktion für den Akku auch eine Ver- und/oder Entsorgung von Betriebsmitteln vorgenommen werden kann. Die Reduzierung des Abstandes der beiden Reinigungsfahrzeuge auf Null ermöglicht es darüber hinaus, dass die Basisstation beispielsweise mit Hilfe eines schwenkbaren Armes um das an der Basisstation angedockte Reinigungsfahrzeug herumgreifen kann oder darüber hinweggreifen kann, um mit dem anderen Reinigungsfahrzeug einen mechanischen und elektrischen Kontakt aufzubauen. In der Basisstation können die Akkumulatoren der beiden Reinigungsfahrzeuge aufgeladen werden. Im angedockten Zustand kann darüber hinaus eine Wartung vorgenommen werden. Die Reinigungsfahrzeuge können gereinigt werden. Reinigungsmittel, beispielsweise Reinigungsflüssigkeiten, können aufgefüllt werden. Es ist insbesondere vorgesehen, dass an der Basisstation ein Schmutzbehälter des ersten Reinigungsfahrzeuges und ein Schmutz-Wasserbehälter des zweiten Reinigungsfahrzeuges entleert werden und ein Frischwasserbehälter des zweiten Reinigungsfahrzeuges mit Frischwasser gefüllt wird. Es wird als vorteilhaft angesehen, dass das zweite Reinigungsfahrzeug die Steuer- und Sensordaten des ersten Reinigungsfahrzeuges nutzt. Ferner wird es als vorteilhaft angesehen, wenn das zweite Reinigungsfahrzeug die Positionsdaten des ersten Reinigungsfahrzeuges nutzt. Die Steuerelektronik des zweiten Reinigungsfahrzeuges kann auf diese Weise minimiert werden. Es ist ferner von Vorteil, wenn das zweite Reinigungsfahrzeug nicht selbsttätig eine Bodenreinigung durchführen kann. Dann ist sichergestellt, dass einer Feuchtreinigung immer eine Trockenreinigung vorangehen muss. Es ist ferner von Vorteil, dass bei Reinigungsaufgaben, bei denen nur eine Trockenreinigung durchgeführt werden soll, lediglich ein Reinigungsfahrzeug zum Einsatz kommen muss.

Ausführungsbeispiele der Erfindung werden anhand beigefügter Zeichnungen erläutert. Es zeigen:
- Fig. 1: schematisch das aus zwei einzelnen Reinigungsfahrzeugen 1, 11 bestehende selbstfahrende Reinigungsgerät, mit einem angedeuteten Bearbeitungsweg 2, auf dem sich das erste Reinigungsfahrzeug 1 bewegt und einem Folgeweg 12, auf dem das zweite Reinigungsfahrzeug 11 dem ersten Reinigungsfahrzeug 1 folgt,
- Fig. 2: eine schnittbildähnliche Darstellung der Anordnung gemäß Figur 1 zur Verdeutlichung der Komponenten der zwei Reinigungsfahrzeuge umfassenden Reinigungsvorrichtung,
- Fig. 3: eine draufsichtartige Darstellung der Geräteanordnung in Kombination mit einer Basisstation 20,
- Fig. 4: schematisch einen Bearbeitungsweg 2 in einem zu reinigenden Raum 21,
- Fig. 5: das Reinigungsgerät in einem an der Basisstation 20 angedockten Zustand, wobei der besseren Unterscheidbarkeit halber die beiden Reinigungsfahrzeuge 1,11 mit einem geringen Abstand zueinander dargestellt sind. Es ist aber vorgesehen, dass sich die Reinigungsfahrzeuge 1, 11 im angedockten Zustand an den bogenförmigen Fahrzeugrändern berühren, und
- Fig. 6: ein zweites Ausführungsbeispiel, bei dem die Reinigungsfahrzeuge 1, 11 mechanisch lösbar aneinandergekoppelt sind.

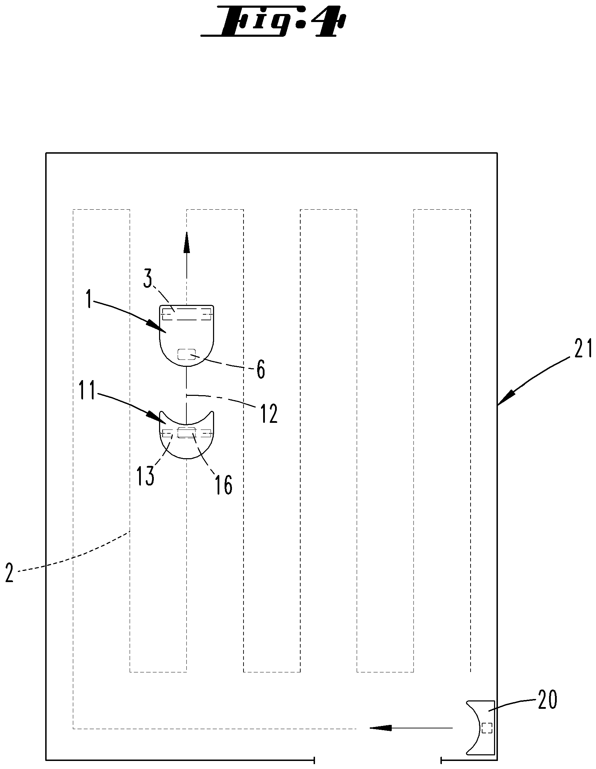

Die in den Ausführungsbeispielen dargestellten Bodenreinigungsgeräte bestehen aus einem ersten Reinigungsfahrzeug 1 und einem zweiten Reinigungsfahrzeug 11. Das erste Reinigungsfahrzeug 1 übernimmt bei einer Bodenreinigung eine Führungsfunktion. Es handelt sich gewissermaßen um ein Führungsfahrzeug. Das Führungsfahrzeug ist in der Lage, eine gemäß einer Fahrstrategie ausgerechneten Bearbeitungsweg 2 auf der Bodenoberfläche eines zu reinigenden Raumes 21 abzufahren. Es handelt sich beispielsweise um die in der Figur 4 dargestellten parallel zueinander verlaufenden Bahnen, die das erste Reinigungsfahrzeug 1 systematisch abfährt, um so im Wesentlichen überschneidungsfrei die gesamte zu reinigende Bodenfläche zu reinigen.

Beim Ausführungsbeispiel besitzt das erste Reinigungsfahrzeug 1 eine Steuereinrichtung 6, in der nach einem vorgegebenen Algorithmus oder aber auch nach manuellen Steuerdaten Steueranweisungen für ein Fahrwerk 7 erzeugt werden. Über einen nicht dargestellten elektrischen Antrieb, der von nicht dargestellten Akkumulatoren gespeist wird, wird eine Bürstenwalze 3 drehangetrieben und ein nicht dargestelltes Gebläse zum Erzeugen eines Saugstroms betrieben. Mit der Bürstenwalze 3 werden trockene Schmutzpartikel von der Bodenoberfläche gelöst. Über einen Saugkanal 4 werden die gelösten Schmutzpartikel mit einem vom Gebläse erzeugten Saugluftstrom in einen Staubsammelbehälter 5 transportiert.

Das zweite Reinigungsfahrzeug 11 besitzt eine zweite Reinigungseinrichtung in Form einer Feuchtreinigungseinrichtung. Eine Wischwalze 13 ist zwischen einer Befeuchtungseinrichtung 14 und einem Saugmund 15 angeordnet. Aus einem Frischwassertank 17 wird über die Befeuchtungseinrichtung 14 die zu reinigende Oberfläche benetzt. Die Feuchtigkeit wird durch den Saugmund 15 wieder abgesaugt in einen Schmutzwassertank 18.

Das zweite Reinigungsfahrzeug 11 besitzt eine Steuereinrichtung 16, die Steueranweisungen für ein Fahrwerk 19 des zweiten Reinigungsfahrzeuges 11 erzeugt.

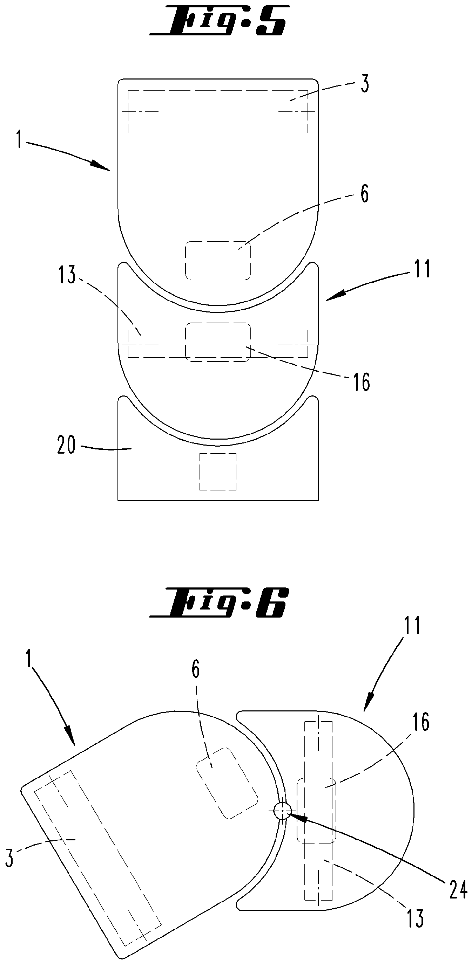

Bei dem in der Figur 6 dargestellten Ausführungsbeispiel sind die beiden Reinigungsfahrzeuge 1,11 über eine mechanische Kupplung 24 miteinander verbunden. Das zweite Reinigungsfahrzeug 11 ist hier gewissermaßen ein Anhänger des ersten Reinigungsfahrzeugs 1. Die mechanische Kupplung 24 kann gelöst werden, so dass das Reinigungsfahrzeug 1 entweder gefolgt vom Reinigungsfahrzeug 11 oder alleine betrieben werden kann.

Nachfolgend wird eine mögliche geometrische Ausgestaltung der beiden Reinigungsfahrzeuge 1,11 beschrieben:
Das erste Reinigungsfahrzeug 1 besitzt eine geradlinige Frontseite und eine entlang einer Bogenlinie verlaufende Rückseite. Das zweite Reinigungsfahrzeug 11 besitzt eine bogenförmige Frontseite, die vom Verlauf her der bogenförmigen Rückseite des ersten Reinigungsfahrzeuges 1 entspricht. Da die Rückseite des ersten Reinigungsfahrzeuges 1 konvex gestaltet ist und die Frontseite des zweiten Reinigungsfahrzeuges 11 konkav gestaltet ist, können die beiden Bogenflächen, insbesondere im angedockten Zustand in eine berührende Anlage zueinander gebracht werden. Die Rückseite des zweiten Reinigungsfahrzeuges 11 verläuft auf einer konvexen Bogenlinie. Diese konvexe Bogenlinie korrespondiert zu einer konkaven Bogenlinie der Basisstation 20, an die entweder die gebogene Rückseite des ersten Reinigungsfahrzeuges 1 oder die gebogene Rückseite des zweiten Reinigungsfahrzeuges 11 andocken kann. Es sind aber auch andere geometrische Ausgestaltungen denkbar, insbesondere solche, die die mechanische Kopplung der beiden Geräte vereinfachen.

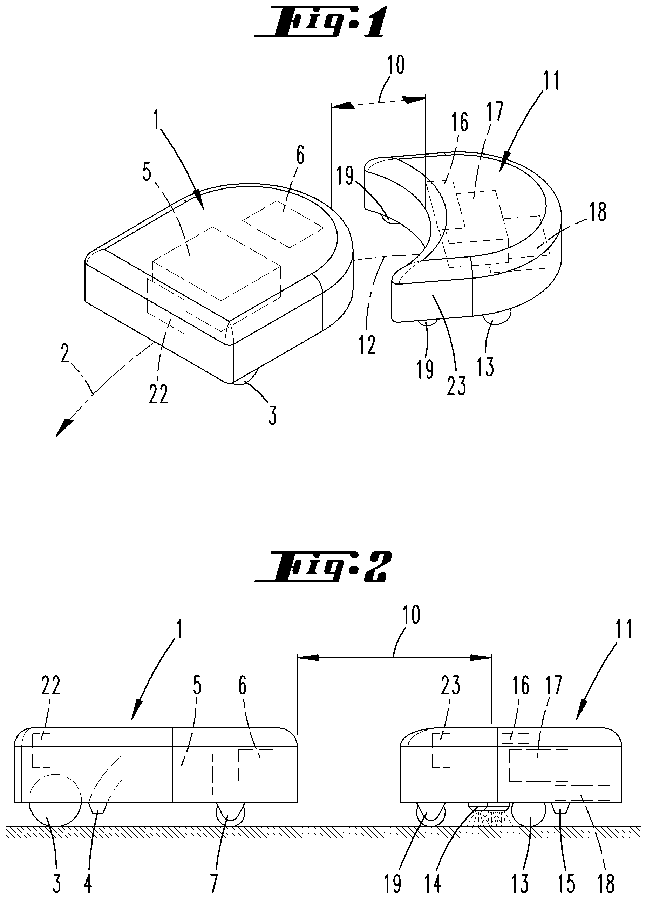

Bei dem in den Figuren 1 bis 5 dargestellten Ausführungsbeispiel sind die beiden Reinigungsfahrzeuge 1,11 mechanisch voneinander getrennt. Über eine Datenübertragungstrecke 10 unmittelbar zwischen einer nicht dargestellten Antenne der Steuereinrichtung 6 und eine nicht dargestellte Antenne der Steuereinrichtung 16 stehen die beiden Reinigungsfahrzeuge 1, 11 in einer Datenübertragungskopplung. Das erste Reinigungsfahrzeug 1 besitzt Sensoren 22, mit denen das erste Reinigungsfahrzeug 1 seine Position im Raum findet und mit denen Hindernisse sowie die Bodenoberfläche erkannt werden kann.

Auch das zweite Reinigungsfahrzeug 11 kann Sensorelemente 23 aufweisen. Insbesondere handelt es sich hierbei um einen Abstandssensor, mit dem das zweite Reinigungsfahrzeug 11 dem ersten Reinigungsfahrzeug 1 in einem festen Abstand folgen kann.

Über die Datenübertragungsstrecke 10 können Positionsdaten, Daten betreffend Hindernisse und Daten betreffend die Art der Bodenoberfläche vom ersten Reinigungsfahrzeug 1 an das zweite Reinigungsfahrzeug 11 übermittelt werden. So ist beispielsweise das zweite Reinigungsfahrzeug 11 in der Lage, die Reinigungseinrichtung 13,14,15 zu inaktivieren, also beispielsweise anzuheben, wenn eine nicht feucht zu reinigende Bodenoberfläche, beispielsweise ein Teppich, überfahren werden soll. Es ist aber auch vorgesehen, dass in einem solchen Fall eine vorübergehende Trennung des ersten Reinigungsfahrzeuges 1, also des Führungsfahrzeug, vom zweiten Reinigungsfahrzeug 11, also dem Folgefahrzeug, stattfindet. Nach einer Bearbeitungsphase, in der das erste Reinigungsfahrzeug 1 eine lediglich trocken zu reinigende Bodenoberfläche reinigt und das zweite Reinigungsfahrzeug 11 eine Bearbeitungspause durchführt, können sich die Bearbeitungsfahrzeuge 1,11 wieder koppeln.

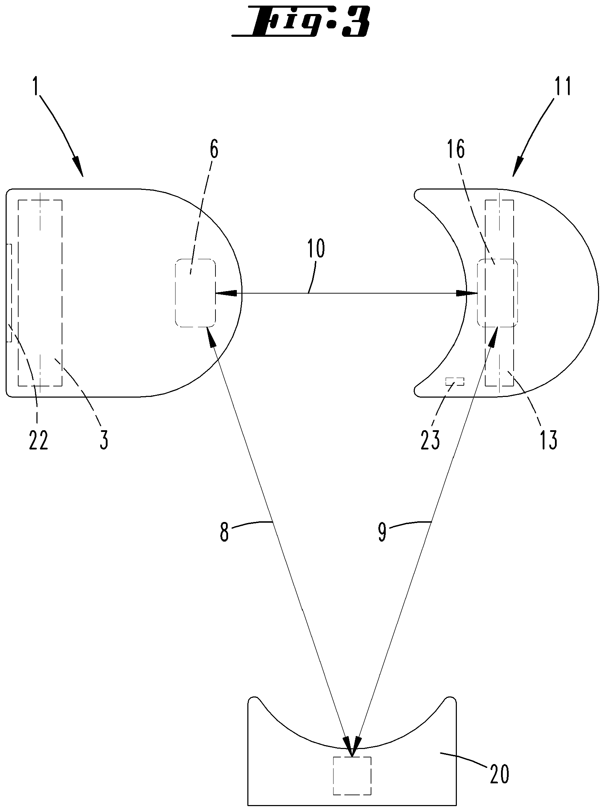

Das in der Figur 3 dargestellte Ausführungsbeispiel zeigt alternativ zur direkten Datenkommunikation der beiden Reinigungsfahrzeuge 1, 11 untereinander eine Datenkommunikation über die Datenübertragungsstrecken 8, 9, bei der eine Basisstation 20 als Relaisstation verwendet wird.

Die Kombination der beiden Reinigungsfahrzeuge 1, 11 kann aber auch über ein externes drahtloses Netzwerk erfolgen, beispielsweise über ein bestehendes Heimnetzwerk (Wlan o.ä.) unter Einbeziehung der dort verwendeten Übertragungsprotokolle.

Die beiden Reinigungsfahrzeuge 1, 11 können gemeinsam die Basisstation 20 ansteuern. Sie sind dabei von ihrer Umrisskontur so gestaltet, dass sie ohne nennenswerten Abstand nebeneinander angeordnet sind. Es ist insbesondere vorgesehen, dass das erste Reinigungsfahrzeug 1 direkt an der Basisstation 20 andockt oder aber, wie es die Figur 5 zeigt, dass das zweite Reinigungsfahrzeug 11 unmittelbar an der Basisstation 20 andockt und das erste Reinigungsfahrzeug 1 am zweiten Reinigungsfahrzeug 11 andockt. Beim Andocken können Hilfsmittel, wie Greifarme oder ein Förderband, verwendet werden. Eine diesbezügliche Andock-Positionierhilfe wird in der DE 10 2013 104 399 beschrieben und vollinhaltlich mit in den Offenbarungsgehalt dieser Anmeldung mit einbezogen, auch um einzelne Merkmale dieses Anmeldungstextes in die Ansprüche zu übernehmen. Treten die Reinigungsfahrzeuge 1,11 in Kontakt zueinander, wie es beispielsweise die Figur 5 annähernd zeigt, so kann das entfernt von der Basisstation 20 angeordnete Fahrzeug 1 mit Hilfe des unmittelbar an der Basisstation angedockten Fahrzeugs 11 elektrisch versorgt werden. Hierzu kann das Reinigungsfahrzeug 1 über eine elektrische Steckverbindung mit dem Reinigungsfahrzeug 11 verbunden sein. Letzteres ist wiederum über eine elektrische Steckverbindung mit der Basisstation 20 verbunden.

In einem nicht dargestellten Ausführungsbeispiel besitzt die Basisstation 20 zwei Andockplätze. An jedem der beiden Andockplätze kann eines der beiden Reinigungsfahrzeuge 1,11 andocken, so dass die beiden Reinigungsfahrzeuge 1, 11 unabhängig voneinander versorgt und entsorgt werden können.

Docken die beiden Reinigungsfahrzeuge 1, 11 in einer Hintereinanderanordnung an der Basisstation 20 an, so kann die Basisstation mit einem Arm oder dergleichen über das unmittelbar an der Basisstation 20 andockende Reinigungsfahrzeug hinweg oder um das unmittelbar an der Basisstation 20 angedockte Reinigungsfahrzeug herumgreifen, um in mechanischen und elektrischen Kontakt zum entfernten Reinigungsfahrzeug zu treten.

Über die Basisstation wird der Staubbehälter 5 des ersten Reinigungsfahrzeuges 1 und der Schmutzwassertank 18 des zweiten Reinigungsfahrzeuges 11 geleert. Der Frischwassertank 17 des zweiten Reinigungsfahrzeuges 11 wird aufgefüllt. An der Basisstation 20 werden ebenfalls die Akkumulatoren für die Antriebe des ersten Reinigungsfahrzeuges 1 und des zweiten Reinigungsfahrzeuges 11 aufgeladen.

Aus der in Figur 5 dargestellten Parkposition kann eine Bodenreinigung begonnen werden, die lediglich vom ersten Reinigungsfahrzeug 1 durchgeführt wird. Hierzu bleibt das zweite Reinigungsfahrzeug 11 an der Basisstation 20. Es ist aber auch möglich, dass ausgehend von dieser Parkstellung eine kombinierte Trocken-Feuchtreinigung durchgeführt wird, bei der das erste Reinigungsfahrzeug 1 beispielsweise den in der Figur 4 dargestellten Bearbeitungsweg 2 abfährt und das zweite Reinigungsfahrzeug 11 in einem konstanten Abstand dem ersten Reinigungsfahrzeug 1 auf einem Folgeweg 12 folgt.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Ein Bodenreinigungsgerät, das dadurch gekennzeichnet ist, dass das zweite Reinigungsfahrzeug 11 dem ersten Reinigungsfahrzeug 1 auf dessen Bearbeitungsweg 2 folgt.

Ein Bodenreinigungsgerät, das dadurch gekennzeichnet ist, dass das zweite Reinigungsfahrzeug 11 über eine insbesondere lösbare mechanische Kopplung 24 mit dem ersten Reinigungsfahrzeug 1 verbunden ist.

Ein Bodenreinigungsgerät, das dadurch gekennzeichnet ist, dass das zweite Reinigungsfahrzeug 11 mit dem ersten Reinigungsfahrzeug 1 mechanisch unverbunden ist und über eine Datenübertragungsstrecke 8, 9,10 mit dem ersten Reinigungsfahrzeug in Wirkverbindung steht.

Ein Bodenreinigungsgerät, das dadurch gekennzeichnet ist, dass eine Reinigungseinrichtung, insbesondere die erste Reinigungseinrichtung 3, 4 eine Trockenreinigungseinrichtung, beispielsweise eine Kehr- und/oder Saugeinrichtung ist.

Ein Bodenreinigungsgerät, das dadurch gekennzeichnet ist, dass eine der Reinigungseinrichtungen, insbesondere die zweite Reinigungseinrichtung 13,14,15 eine Feuchtreinigungseinrichtung, beispielsweise eine Wischeinrichtung oder eine kombinierte Saug-Wischeinrichtung ist.

Ein Bodenreinigungsgerät, das dadurch gekennzeichnet ist, dass das zweite Reinigungsfahrzeug 11 über eine direkte Datenübertragungsstrecke 10 mit dem ersten Reinigungsfahrzeug 1 oder über eine indirekte Datenübertragungsstrecke 8, 9 insbesondere über eine Basisstation 20 miteinander logisch gekoppelt sind.

Ein Bodenreinigungsgerät, das dadurch gekennzeichnet ist, dass ein drahtloser Datenaustausch zwischen dem ersten Reinigungsfahrzeug 1 und dem zweiten Reinigungsfahrzeug 11 über ein Netzwerkprotokoll erfolgt.

Ein Verfahren, das dadurch gekennzeichnet ist, dass das erste Reinigungsfahrzeug 1 über eine Datenübertragungsstrecke 8, 9,10 die Steuervorgaben und/oder zweite Steueranweisungen an eine Steuereinrichtung 16 des zweiten Reinigungsfahrzeugs 11 überträgt, nach welchen Steueranweisungen das zweite Reinigungsfahrzeug 11 zumindest abschnittweise auf dem Bearbeitungsweg 2 dem ersten Reinigungsfahrzeug 1 folgt und auf seinem Folgeweg 12 einen zweiten Reinigungsschritt durchführt.

Ein Verfahren oder Steuerprogramm, die dadurch gekennzeichnet sind, dass das zweite Reinigungsfahrzeug 11 dem ersten Reinigungsfahrzeug 1 in einem festen Abstand folgt.

Ein Verfahren oder Steuerprogramm, die dadurch gekennzeichnet sind, dass die Steuereinrichtung 16 des zweiten Reinigungsfahrzeugs 11 von zumindest einem Sensor 22 des ersten Reinigungsfahrzeugs 1 gewonnene Sensordaten und/oder Positionsdaten und/oder Daten betreffend eine Fahrstrategie nutzt.

Ein Verfahren oder Steuerprogramm, die dadurch gekennzeichnet sind, dass das zweite Reinigungsfahrzeug 11 dem ersten Reinigungsfahrzeug 1 zu einer Basisstation folgt und an der Basisstation 20 andockt.

### Bezugszeichenliste:

- 1: erstes Reinigungsfahrzeug
- 2: Bearbeitungsweg
- 3: Bürste
- 4: Saugkanal
- 5: Staubbehälter
- 6: Steuereinrichtung
- 7: Fahrwerk
- 8: Datenstrecke
- 9: Datenstrecke
- 10: Datenstrecke
- 11: zweites Reinigungsfahrzeug
- 12: Bearbeitungsweg (Folgeweg)
- 13: Wischeinrichtung
- 14: Befeuchtungseinrichtung
- 15: Saugmund
- 16: Steuereinrichtung
- 17: Frischwassertank
- 18: Schmutzwassertank
- 19: Fahrwerk
- 20: Basisstation
- 21: Raum
- 22: Sensor
- 23: Sensor
- 24: mechanische Kupplung

## Patentansprüche

1. Selbstfahrendes Bodenreinigungsgerät mit einem manuell gesteuerten oder programmgesteuerten, einen Bearbeitungsweg (2) über eine zu reinigende Oberfläche abfahrenden ersten Reinigungsfahrzeug (1), mit einer ersten Reinigungseinrichtung (3, 4) zur Durchführung eines ersten Reinigungsschrittes, **gekennzeichnet durch** ein zweites Reinigungsfahrzeug (11) mit einer zweiten Reinigungseinrichtung (13,14,15) zur Durchführung eines zweiten Reinigungsschrittes, wobei das zweite Reinigungsfahrzeug (11) derart an das erste Reinigungsfahrzeug (1) gekoppelt ist, dass das zweite Reinigungsfahrzeug (11) dem ersten Reinigungsfahrzeug (1) auf dessen Bearbeitungsweg (2) folgt.

2. Bodenreinigungsgerät nach Anspruch 1, **dadurch gekennzeichnet, dass** das zweite Reinigungsfahrzeug (11) über eine insbesondere lösbare mechanische Kopplung (24) mit dem ersten Reinigungsfahrzeug (1) verbunden ist.

3. Bodenreinigungsgerät nach Anspruch 1, **dadurch gekennzeichnet, dass** das zweite Reinigungsfahrzeug (11) mit dem ersten Reinigungsfahrzeug (1) mechanisch unverbunden ist und über eine Datenübertragungsstrecke (8, 9,10) mit dem ersten Reinigungsfahrzeug in Wirkverbindung steht.

4. Bodenreinigungsgerät nach einem der vorhergehenden Ansprüche, **dadurch gekennzeichnet, dass** eine Reinigungseinrichtung, insbesondere die erste Reinigungseinrichtung (3, 4) eine Trockenreinigungseinrichtung, beispielsweise eine Kehr- und/ oder Saugeinrichtung ist.

5. Bodenreinigungsgerät nach einem der vorhergehenden Ansprüche, **dadurch gekennzeichnet, dass** eine der Reinigungseinrichtungen, insbesondere die zweite Reinigungseinrichtung (13,14,15) eine Feuchtreinigungseinrichtung, beispielsweise eine Wischeinrichtung oder eine kombinierte Saug-Wischeinrichtung ist.

6. Bodenreinigungsgerät nach einem der vorhergehenden Ansprüche, **dadurch gekennzeichnet, dass** das zweite Reinigungsfahrzeug (11) über eine direkte Datenübertragungsstrecke (10) mit dem ersten Reinigungsfahrzeug (1) oder über eine indirekte Datenübertragungsstrecke (8, 9) insbesondere über eine Basisstation (20) miteinander logisch gekoppelt sind.

7. Bodenreinigungsgerät nach einem der vorhergehenden Ansprüche, **dadurch gekennzeichnet, dass** ein drahtloser Datenaustausch zwischen dem ersten Reinigungsfahrzeug (1) und dem zweiten Reinigungsfahrzeug (11) über ein Netzwerkprotokoll erfolgt.

8. Verfahren zum Betrieb eines selbstfahrenden Bodenreinigungsgerätes (1) oder in einer Steuereinrichtung (6,16) eines selbstfahrenden Bodenreinigungsgerätes (1) gemäß einem der vorhergehenden Ansprüche eingerichtetes Steuerprogramm, wobei eine Steuereinrichtung (6) des ersten Reinigungsfahrzeugs (1) aus Steuervorgaben erste Steuereinweisungen erstellt, nach denen das erste Reinigungsfahrzeug (1) einen Bearbeitungsweg (2) abfährt und auf dem Bearbeitungsweg (2) mindestens abschnittweise einen ersten Reinigungsschritt durchführt, **dadurch gekennzeichnet, dass** das erste Reinigungsfahrzeug (1) über eine Datenübertragungsstrecke (8, 9,10) die Steuervorgaben und/oder zweite Steueranweisungen an eine Steuereinrichtung (16) eines zweiten Reinigungsfahrzeugs (11) überträgt, nach welchen Steueranweisungen das zweite Reinigungsfahrzeug (11) zumindest abschnittweise auf dem Bearbeitungsweg (2) dem ersten Reinigungsfahrzeug (1) folgt und auf seinem Folgeweg (12) einen zweiten Reinigungsschritt durchführt.

9. Verfahren oder Steuerprogramm nach Anspruch 8, **dadurch gekennzeichnet, dass** das zweite Reinigungsfahrzeug (11) dem ersten Reinigungsfahrzeug (1) in einem festen Abstand folgt.

10. Verfahren oder Steuerprogramm nach Anspruch 8 oder 9, **dadurch gekennzeichnet, dass** die Steuereinrichtung (16) des zweiten Reinigungsfahrzeugs (11) von zumindest einem Sensor (22) des ersten Reinigungsfahrzeugs (1) gewonnene Sensordaten und/ oder Positionsdaten und/ oder Daten betreffend eine Fahrstrategie nutzt.

11. Verfahren oder Steuerprogramm nach einem der Ansprüche 8 bis 10, **dadurch gekennzeichnet, dass** das zweite Reinigungsfahrzeug (11) dem ersten Reinigungsfahrzeug (1) zu einer Basisstation folgt und an der Basisstation (20) andockt.

## Claims

1. A self-propelled floor cleaning device comprising a manually controlled or program-controlled first cleaning vehicle (1), which moves across a treatment path (2) across a surface, which is to be cleaned, comprising a first cleaning device (3, 4) for carrying out a first cleaning step, **characterized by** a second cleaning vehicle (11), comprising a second cleaning device (13, 14, 15) for carrying out a second cleaning step, wherein the second cleaning vehicle (11) is coupled to the first cleaning vehicle (1) such that the second cleaning vehicle (11) follows the first cleaning vehicle (1) on the treatment path (2) thereof.

2. The floor cleaning device according to claim 1, **characterized in that** the second cleaning vehicle (11) is connected to the first cleaning vehicle (1) via an in particular releasable mechanical coupling (24).

3. The floor cleaning device according to claim 1, **characterized in that** the second cleaning vehicle (11) is mechanically unconnected to the first cleaning vehicle (1) and is in operative connection with the first cleaning vehicle via a data transmission path (8, 9, 10).

4. The floor cleaning device according to one of the preceding claims, **characterized in that** a cleaning device, in particular the first cleaning device (3, 4), is a dry cleaning device, for example a sweeping and/or suction device.

5. The floor cleaning device according to one of the preceding claims, **characterized in that** one of the cleaning devices, in particular the second cleaning device (13, 14, 15), is a wet cleaning device, for example a mopping device or a combination suction-mopping device.

6. The floor cleaning device according to one of the preceding claims, **characterized in that** the second cleaning vehicle (11) is logically coupled to the first cleaning vehicle (1) via a direct data transmission path (10) or via an indirect data transmission path (8, 9), in particular via a base station (20).

7. The floor cleaning device according to one of the preceding claims, **characterized in that** a wireless data exchange takes place between the first cleaning vehicle (1) and the second cleaning vehicle (11) via a network protocol.

8. A method for operating a self-propelled floor cleaning device (1) or a control program set up in a control device (6, 16) of a self-propelled floor cleaning device (1) according to one of the preceding claims, wherein a control device (6) of the first cleaning vehicle (1) prepares first control instructions from control defaults, according to which the first cleaning vehicle (1) moves across a treatment path (2) and carries out a first cleaning step on the treatment path (2) at least in sections, **characterized in that** the first cleaning vehicle (1) transmits the control defaults and/or second control instructions to a control device (16) of a second cleaning vehicle (11) via a data transmission path (8, 9, 10), according to which control instructions the second cleaning vehicle (11) follows the first cleaning vehicle (1) on the treatment path (2) at least in sections and carries out a second cleaning step on its consecutive path (12).

9. The method or control program according to claim 8, **characterized in that** the second cleaning vehicle (11) follows the first cleaning vehicle (1) at a fixed distance.

10. The method or control program according to claim 8 or 9, **characterized in that** the control device (16) of the second cleaning vehicle (11) uses sensor data and/or position data and/or data relating to a driving strategy, which are obtained from at least one sensor (22) of the first cleaning vehicle (1).

11. The method or control program according to one of claims 8 to 10, **characterized in that** the second cleaning vehicle (11) follows the first cleaning vehicle (1) to a base station and docks on the base station (20).

## Revendications

1. Dispositif de nettoyage de sol automoteur ayant un premier véhicule de nettoyage (1) à commande manuelle ou programmée, parcourant un trajet de traitement (2) sur une surface à nettoyer, avec un premier dispositif de nettoyage (3, 4) pour effectuer une première étape de nettoyage, **caractérisé par** un deuxième véhicule de nettoyage (11) ayant un deuxième dispositif de nettoyage (13, 14, 15) pour effectuer une deuxième étape de nettoyage, dans lequel le deuxième véhicule de nettoyage (11) est couplé au premier véhicule de nettoyage (1) de manière à ce que le deuxième véhicule de nettoyage (11) suit le premier véhicule de nettoyage (1) sur son trajet de traitement (2).

2. Dispositif de nettoyage de sol selon la revendication 1, **caractérisé en ce que** le deuxième véhicule de nettoyage (11) est relié au premier véhicule de nettoyage (1) par l'intermédiaire d'un couplage mécanique (24), en particulier amovible.

3. Dispositif de nettoyage de sol selon la revendication 1, **caractérisé en ce que** le deuxième véhicule de nettoyage (11) n'est pas relié mécaniquement au premier véhicule de nettoyage (1) et est en liaison opérationnelle avec le premier véhicule de nettoyage par l'intermédiaire d'une liaison de transmission de données (8, 9, 10).

4. Dispositif de nettoyage de sol selon l'une des revendications précédentes, **caractérisé en ce qu'**un dispositif de nettoyage, en particulier le premier dispositif de nettoyage (3, 4), est un dispositif de nettoyage à sec, par exemple un dispositif de balayage et/ou d'aspiration.

5. Dispositif de nettoyage de sol selon l'une des revendications précédentes, **caractérisé en ce que** l'un des dispositifs de nettoyage, en particulier le deuxième dispositif de nettoyage (13, 14, 15), est un dispositif de nettoyage par voie humide, par exemple un dispositif d'essuyage ou un dispositif combiné d'aspiration et d'essuyage.

6. Dispositif de nettoyage de sol selon l'une des revendications précédentes, **caractérisé en ce que** le deuxième véhicule de nettoyage (11) et le premier véhicule de nettoyage (1) sont couplés de manière logique l'un à l'autre par l'intermédiaire d'une liaison de transmission de données directe (10) ou par l'intermédiaire d'une liaison de transmission de données indirecte (8, 9), en particulier par l'intermédiaire d'une station de base (20).

7. Dispositif de nettoyage de sol selon l'une des revendications précédentes, **caractérisé en ce qu'**un échange de données sans fil entre le premier véhicule de nettoyage (1) et le deuxième véhicule de nettoyage (11) s'effectue par l'intermédiaire d'un protocole de réseau.

8. Procédé pour faire fonctionner un dispositif de nettoyage de sol automoteur (1) ou un programme de commande mis en place dans un dispositif de commande (6, 16) d'un dispositif de nettoyage de sol automoteur (1) selon l'une des revendications précédentes, dans lequel un dispositif de commande (6) du premier véhicule de nettoyage (1) établit des premières instructions de commande sur la base de prescriptions de commande d'après lesquelles le premier véhicule de nettoyage (1) démarre un trajet de traitement (2) et exécute au moins par endroits une première étape de nettoyage sur le trajet de traitement (2), **caractérisé en ce que** le premier véhicule de nettoyage (1), par l'intermédiaire d'une liaison de transmission de données (8, 9, 10), transmet les prescriptions de commande et/ou des deuxièmes instructions de commande à un dispositif de commande (16) d'un deuxième véhicule de nettoyage (11), instructions de commande d'après lesquelles le deuxième véhicule de nettoyage (11) suit au moins par endroits le trajet de traitement (2) du premier véhicule de nettoyage (1) et exécute une deuxième étape de nettoyage sur son trajet suiveur (12).

9. Procédé ou programme de commande selon la revendication 8, **caractérisé en ce que** le deuxième véhicule de nettoyage (11) suit le premier véhicule de nettoyage (1) à une distance fixe.

10. Procédé ou programme de commande selon la revendication 8 ou 9, **caractérisé en ce que** le dispositif de commande (16) du deuxième véhicule de nettoyage (11) utilise des données de capteur obtenues par au moins un capteur (22) du premier véhicule nettoyeur (1) et/ou des données de position et/ou des données relatives à une stratégie de déplacement.

11. Procédé ou programme de commande selon l'une quelconque des revendications 8 à 10, **caractérisé en ce que** le deuxième véhicule de nettoyage (11) suit le premier véhicule de nettoyage (1) jusqu'à une station de base, et s'arrime à la station de base (20).
